# EUROPEAN PATENT APPLICATION

(11) **EP 1 880 975 A1**
(43) Date of publication of application: **23.01.2008**
(21) Application number: 06425492.3
(22) Date of filing: 17.07.2006
(51) Int. Cl.: B67D 5/04, B67D 5/34, B67D 5/08

(54) **Workshop fluid distribution plant**

(71) Applicant: Filcar S.p.A., 42100 Reggio Emilia (IT)
(72) Inventor: Di Betta, Rosalino, 42100 Reggio Emilia (IT); Virga, Giuseppe, 42040 Campegine (IT); Giannini, Luca, 42020 Rivalta (IT)
(74) Representative: Bongiovanni, Simone

(57) **Abstract**

A distribution plant for at least one fluid (FL1) in a workshop.

The plant is characterised in that it comprises:
- a pumping system (SP1; SP2; SP3) which is adapted to ensure a variable flow rate of the fluid (FL1) according to the requests of each user (Ul'); and in that
- it comprises a regulation system (SR1; SR2; SR3) of the flow rate (FL1) in each user (U1').

## Description

The present invention relates to a workshop fluid distribution plant.

In particular, the present invention finds advantageous, but not exclusive, application in a mechanical car repair workshop, to which explicit reference will be made in the description that follows without for this loosing in generality.

As known, over the last years, an increasing demand for fluid distribution plant solutions in workshops and service centres, and on production lines of motor vehicles for civil, industrial, military and farming use, has been recorded.

In this predicament, workshops have been equipped with the best offered by the market, and both fixed and mobile oil dispensing solutions have received great impetus.

In order to better understand the present invention, it is preferable to outline a traditional system.

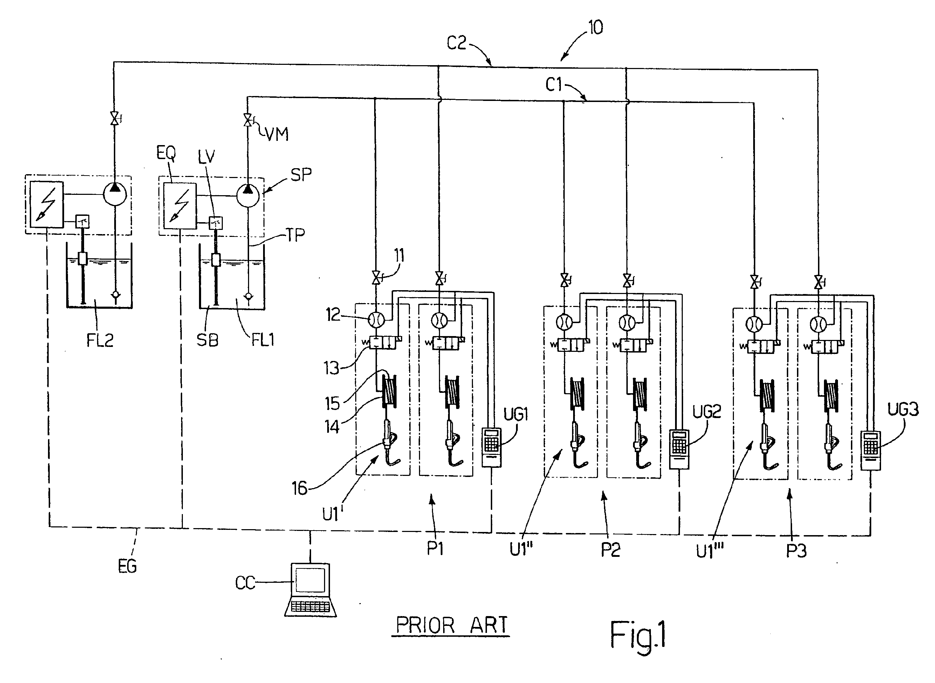

Indeed, in figure 1, number 10 generically shows as a whole a possible traditional distribution plant of at least one fluid in a car workshop.

In the embodiment shown in figure 1 (prior art), plant 10 comprises two equivalent hydraulic circuits C1, C2 for distributing two generally reciprocally different fluids FL1, FL2 respectively, to three fixed stations P1, P2, P3.

Therefore, by describing hydraulic circuit C1, hydraulic circuit C2 is also described.

In hydraulic circuit C1, a tank SB for stocking a first fluid FL1 (e.g. lubricant oil) and a pumping system SP hydraulically connected to the fluid distribution hydraulic circuit C1 towards a first series of users U1', U1", U1"' belonging to a respective fixed station P1, P2, P3 may be recognised.

Pumping system SP is connected in suction to a suction tube TP immersed in fluid FL1 and in delivery to hydraulic circuit C1 by means of a manual valve VM.

The operation of pumping system SP is managed by an electrical panel EQ which monitors the presence of fluid FL1 in tank SB by means of a level gauge LV and communicates with an electronic control system EG for inhibiting the dispensing of fluid FL1 when it is about to finish.

A control unit UG1, UG2, UG3 for each respective fixed position P1, P2, P3, combined with a dedicated PC CC, constitutes the aforesaid electronic control system EG of the entire system 10.

Each user U1', U1", U1"' is connected to hydraulic fluid distribution circuit C1 by means of a manual valve 11 (figure 1).

Furthermore, in the embodiment of the prior art, shown in figure 1, each user U1', U1", U1"' comprises a volume counter 12 and a solenoid valve 13 (normally closed) to shut off the flow of fluid FL1.

Volume counter 12 and solenoid valve 13 are electronically connected to control unit UG1 which governs the dispensing of fluid FL1 to fixed station P1. The drawing of fluid FL1 is guaranteed by a mechanical reel 14 for a flexible tube 14 ending with a dispensing gun 16. Solenoid valve 13 is normally in "closed" position (shown in figure 1). During dispensing of fluid FL1, a user, by controlling control unit UG1, ensures that solenoid valve 13 is opened, thus allowing the free flow of fluid FL1 from tank SB to dispensing gun 16. At the same time, control unit UG1 records the quantity of dispensed fluid by means of volume counter 12.

For the way it is constructed, plant 10 belonging to the prior art as that shown in figure 1 with the types of pump commonly used (pneumatic piston pump, positive-displacement pump with maximum pressure valve) manifests several problems related to the dispensing of fluid FL1.

The main problems noticed using a pumping system based on a pneumatic piston pump include:
1. pulsating dispensing of the fluid;
2. strong variations in fluid flow rate according to the type of fluid, temperature and number of contemporary active loads;
3. different flow rates between different users according to their distance from the pump; and
4. poor energy efficiency of the pump, and excessive noise of the pump itself.

Alternatively, by using a pumping system based on a, for example, geared, positive-displacement pump, the problems related to flow pulsation and to flow rate variations in the different operative conditions are solved; new problems however arise:
a. the need to envisage a distinct pump and a hydraulic circuit for each user, or group of users for which unitary contemporaneousness can be ensured;
b. increased system costs related to the higher number of pumps;
c. increased installation costs related to the higher number of distinct hydraulic circuits;
d. increased complexity of the plant; and
e. high energy costs related to the unfavourable conditions in which the pumps run (i.e. high number of electrical motor breakaways and frequent intervention of the maximum pressure valve of the pump).

In conclusion, whatever the selected pumping system, the user cannot determine the dispensing flow rate and the energy efficiency of the pump is poor due to the limitations of the component and/or the unfavourable conditions in which it runs.

The innovative plant solution which will be described below is based on a system capable of selecting the flow rate of each single user, so as to never exceed the set value.

Finally, by combining this to a pumping system capable of compensating the continuous variations of flow rate required by the system, the two-fold advantage of optimising dispensing and operating with a high energy efficiency pump is obtained, because start-ups are rationalised to the utmost and the maximum pressure valve nearly never intervenes.

Therefore, it is the object of the present invention to make a workshop fluid distribution plant, which is free from the drawbacks described above and which at the same time is easy and cost-effective to make.

A distribution plant for at least one fluid in a workshop is therefore made according to the present invention and to the accompanying claims.

The present invention will now be described with reference to the accompanying figures illustrating a non-limitative embodiment example, in which:
- figure 2 shows a first embodiment of a compensated flow regulating valve (CFRV);
- figure 3 shows a second embodiment of a CFRV;
- figure 4 shows a first embodiment of a fluid flow regulating system, system used in a plant object of the present invention;
- figure 5 shows a second embodiment of a fluid flow regulating system, system used in a plant object of the present invention;
- figure 6 shows a third embodiment of a fluid flow regulating system, system used in a plant object of the present invention;
- figure 7 shows a diagram outlining a pumping system used in the plant object of the present invention;
- figure 8 shows a first embodiment of the pumping system in figure 7;
- figure 9 shows a second embodiment of the pumping system in figure 7;
- figure 10 shows a third embodiment of the pumping system in figure 7;
- figure 11 shows a magnification of a first configuration of an element used in one of the two systems in figures 9 and 10; and
- figure 12 shows a magnification of a second configuration of the element in figure 11.

When evaluating the flow rate dispensed by a plant, the components used in making the dispensing point may be considered as fixed bottlenecks which limit the flow of the fluid. Therefore, in order to ensure a certain flow rate from a dispensing point, a pressure adapted to overcome the loss of distributed load attributed to the distributing pipe, plus the concentrated loss of loads attributed to the single components (valves, volume counters, reel, dispensing gun) must be applied to the fluid. Conversely, in equivalent running conditions, the dispensed flow rate will vary according to the length of the system, the type of fluid and its viscosity related to temperature.

Given these premises, it is apparent that extreme operating conditions often occur in a plant making it impossible to ensure optimal and constant in time flow rate for the various drawing points:
- for example, in one same circuit, the station closest to the pump will have a higher flow rate with respect to the most distant station (different loss of load linked to the pump), therefore by adjusting the pressure in the plant to ensure the ideal flow rate to the last station, the flow rate in the first station will be excessive; conversely, by reducing the pressure to have an optimal flow rate in the first station, the flow rate in the last station will be insufficient;
- by adjusting the plant pressure during the winter (colder and therefore more viscous fluid), the flow rate will be excessive during the summer (warmer and therefore less viscous fluid); conversely, if the adjustment is made in the summer, the flow rate will be insufficient in winter;
- furthermore, by adjusting the total flow rate of the system to ensure contemporaneousness (stations dispensing the same fluid from the same circuit at the same time), the flow rate will be excessive when one works from a single station; conversely, by limiting the flow rate to dispense from one station without problems, the flow rate will be halved when dispensing from two stations at the same time.

A first possible improving intervention consists in inserting, before each drawing point, at least one "Compensated Flow Regulating Valve" (hereinafter abbreviated as CFRV). In this way, the working pressure of the system may be increased, thus satisfying the most demanding operative conditions, while ensuring that the flow rate does not exceed the setting of the CFRV in other conditions of use.

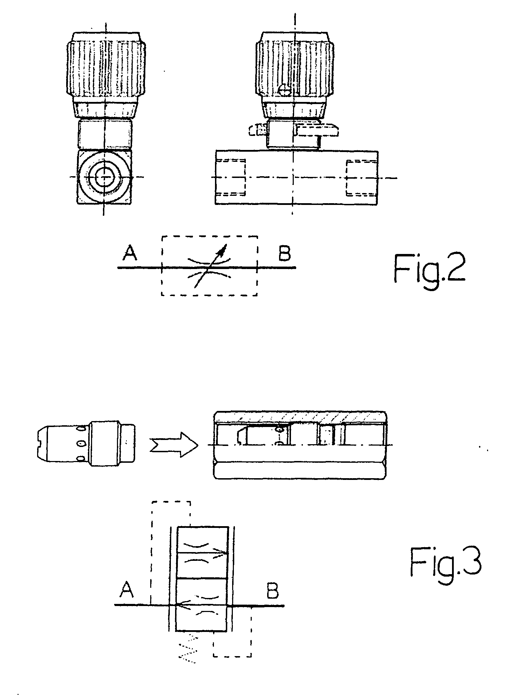

Figures 2, 3 show two types of CFRV, one with flow rate adjustable by means of a knob and the other with fixed flow rate, respectively.

The CFRV valve behaves as a variable bottleneck which, inserted in a hydraulic circuit, allows to limit the flow to a predetermined value. Practically, the fluid crosses a bottleneck which produces a pressure drop between an input point A and an output point B proportional to the flow rate squared; the pressure P_{A} pushes a shutter which tends to further close the passage, while pressure P_{B}, combined with a calibration spring, is opposed to the shift of the shutter, thus "compensating" the thrust of P_{A}. The force of the spring determines the value ΔP_{AB} over which the valve intervenes and flow rate is limited.

In the adjustable version in figure 2, a knob is used to vary the force of the spring, thus allowing to change the maximum flow rate of the CFRV valve, while in the fixed flow rate version (figure 3), the spring is calibrated by the manufacturer and the setting cannot be changed (there are various models for different flow rates); the latter version appears as a "cartridge valve" to be inserted in a common internal threaded union.

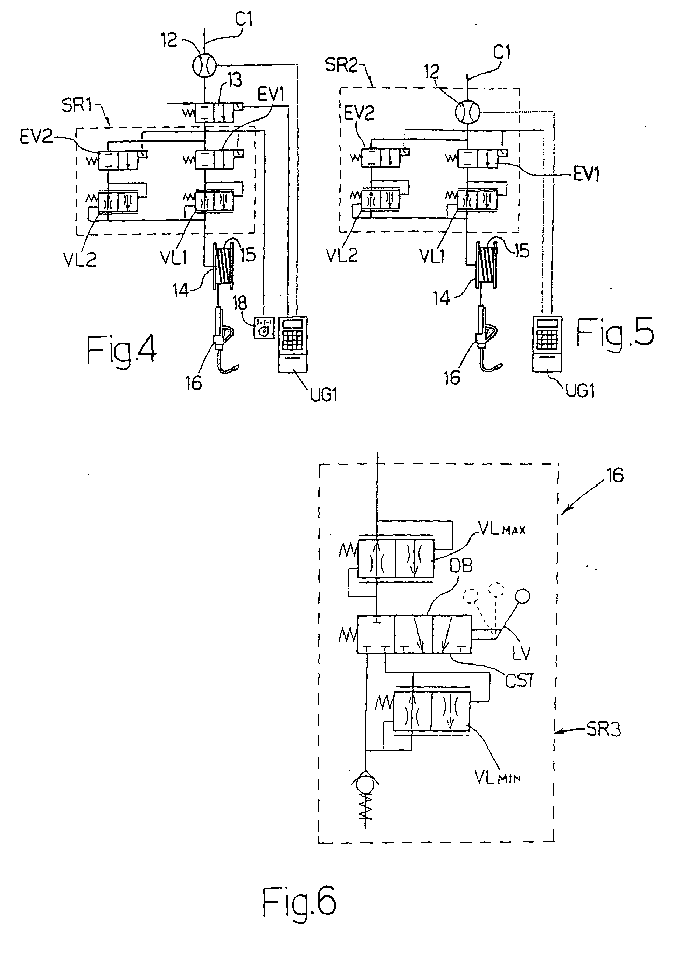

Figures 4, 5, 6 show some examples of application of the valves just described.

As will be explained in better detail below, a valve system using at least two CFRVs (adjustable or fixed) may be easily installed upstream of the dispensing components, allowing to operate with high fluid pressures, ensuring that the flow rate set by the valve is never exceeded.

Therefore, some solutions which allow the operator to select the flow rate with which to work from at least two options, will be taken into consideration in the continuance:
- "minimum flow rate" (e.g. 2 1/min) for small displacement vehicles or for topping up; or
- "maximum flow rate" (e.g. 6 1/min) for large displacement vehicles.

An intermediate flow rate (e.g. 4 1/min) may be envisaged and however, given the type of use, the need to have more than three different calibration values is not felt.

For example, figure 4 shows a first adjustment system SR1 of the flow rate of fluid FL1, consisting of a plurality of valves VL1, VL2, EV1, EV2, arranged according to a hydraulic diagram. We can observe that (by using also the numbers used in figure 1 for components which are the same) the flow crosses system SR1 when valve 13 is open, controlled by control unit UG1.

In this condition, by opening valve EV1, in series to VL1, with EV2 closed, the flow rate of the fluid being distributed is minimum, e.g. 2 1/min.

If instead valve EV1 is closed and valve EV2 is opened, the latter in series with VL2, there is a medium flow rate of 4 1/min to dispensing gun 16.

Finally, if both valves EV1, EV2 are opened, there is a maximum flow rate of 6 1/min (i.e. the sum of the two flow rates).

It must also be observed that valves VL1 and VL2 are two CFRVs (figures 2, 3), while valves EV1, EV2, are solenoid valves of the "normally closed" type.

The flow rate is set by the operator by means of a flow rate selector 18 (figure 4) which controls the opening of either EV1, or EV2, or both.

In other words, in a first embodiment shown in figure 4, a system SR1 has been added (comprising valves VL1, VL2, EV1, EV2), which is arranged downstream of solenoid valve 13 of the "normally closed" type, to the traditional system shown in figure 1.

In a second embodiment shown in figure 5, system SR1 integrates volume counter 12 forming a second system SR2, in which solenoid valves EV1, EV2, are directly controlled by control unit UG1.

As an alternative to valve assembly VL1, VL2, EV1, EV2, used to determine the maximum flow rate in systems SR1, SR2, a "proportioning flow rate regulating valve" may be used.

This solution, not shown, allows to predetermine the flow rates having the proportioning valve the possibility of adjusting infinite flow rates.

The flow rate may be selected either directly on the control unit UG1, or by means of a rotational selector with "n" positions (not shown).

Finally, in a third embodiment shown in figure 6, a third system SR3 may be installed directly within the dispensing gun 16.

In particular, system SR3 comprises two valves VLmax, VLmin (both of the CFRV type), between which a distributor DB (of the 3/3 type) is positioned. The valve VLmax is the one allowing maximum flow rate (e.g. 6 1/min) and will be in all cases crossed by fluid.

In this way, the output flow rate will always and however be limited to such maximum value.

Distributor DB positioned downstream of the VLmax valve is operated manually by an operator by means of a lever LV of distributing gun 16. Distributor DB is normally closed and therefore home position envisages the block of the flow rate through dispensing gun 16 (configuration shown in figure 6).

By operating distributor DB (i.e. by acting on lever LV) a spool CST is shifted to central position in which the flow rate is entirely deviated towards the second valve VLmin. This valve VLmin is characterised by a lower plate rating and thus reduces the flow rate dispensed by gun 16 (e.g. to 2 1/min).

By further acting on lever LV, the spool CST is shifted again and positioned in a terminal position where valve Vlmin is bypassed by the fluid.

In this case, the fluid flow rate is limited only by previously crossed valve Vlmax to the plate rating of the same (as mentioned, e.g. 6 1/min).

In this way, it is possible to select between two flow rates so as to adapt to the needs of each dispensing operation, limiting on the other hand plant dimensions and complexity.

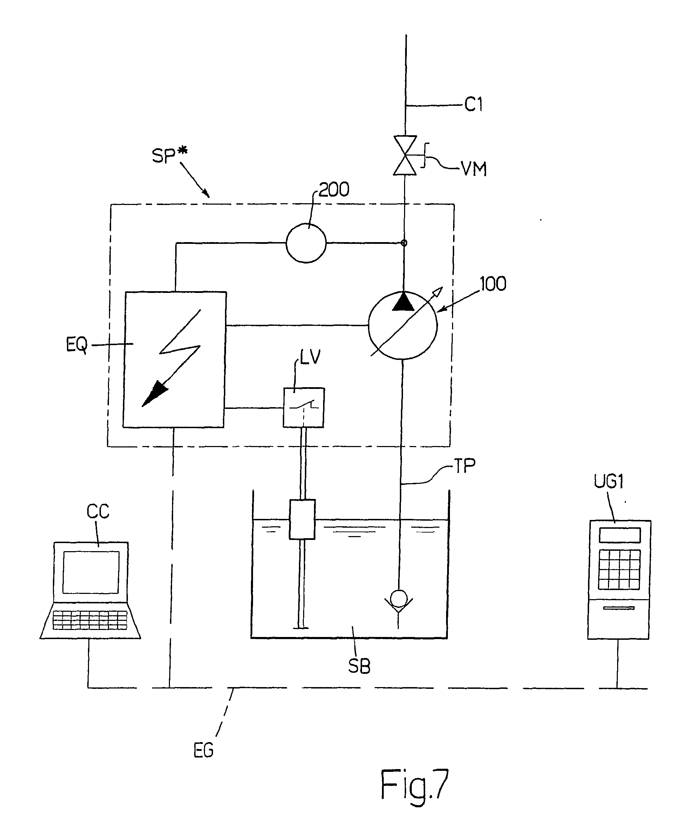

Figure 7 schematically shows the main components of a new pumping system SP*.

In particular, pumping system SP* comprises a variable flow rate pumping assembly 100, which is connected to a suction tube TP immersed in tank SB.

Furthermore, pumping assembly 100 is connected to hydraulic circuit C1 by means of a manual valve VM.

The pumping system SP* is managed by an electrical panel EQ, which monitors the level of fluid by means of a level switch LV, and the main operating parameters of the plant, by means of a series of transducers 200.

The electrical panel EQ may be connected to the electronic control system EG to communicate that fluid FL1 in tank SB is finished, and its dispensing may be temporarily inhibited and/or to receive information from the control unit UG1 on active flow dispensing requests.

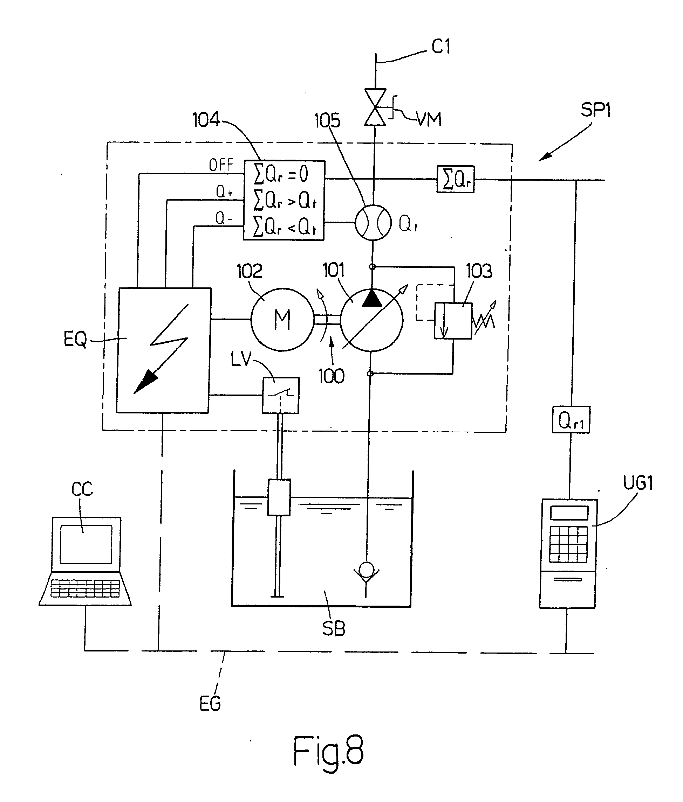

The solution shown in figure 8 refers to a first embodiment of a pumping system SP1 applied to a distribution system (not shown entirely) object of the present invention.

In pumping system SP1, pumping assembly 100 comprises a variable-displacement pump 101 to which an electrical motor 103 and a maximum pressure valve 103 are coupled.

Electrical panel EQ controls electrical motor 102 and operates the servo mechanism in charge of varying the displacement of pump 101.

The electrical motor 102 start-up enable and the displacement increase/decrease commands are generated by an electronic board 104 which compares the output flow rate (Qₜ) with the required flow rate (Qᵣ) .

The output flow rate (Qₜ) is read by a volume counter 105 in series to delivery.

The required flow rate (Qᵣ) is given, in turn, by the sum of the flow rates set by control units UG1, UG2, UG3 of each active fixed station P1, P2, P3.

If the required flow rate (Qᵣ) is null (ΣQᵣ=0: no active request), electronic board 104 switches electrical motor 102 off.

If the required flow rate (Qᵣ) is higher than that dispensed (ΣQᵣ>Qₜ), electronic board 104 increases the displacement of pump 101.

Finally, if the required flow rate (Qᵣ) is lower than that dispensed (ΣQᵣ>Qₜ), electronic board 104 decrease the displacement of pump 101. Obviously, this solution requires that a selection performed by means of a control unit UG1, UG2, UG3 is used for controlling the flow rate.

Alternatively to variable-displacement pump 101, a fixed-displacement pump may be used (not shown) varying the number of revolutions (the result is a variable flow rate).

This may be obtained by managing electrical motor 102 by means of an inverter (not shown), or by operating the pump with a servo controlled mechanical motor variator.

However, this proposed solution does not completely solve the problem of the high number of electrical motor start-ups, requires to be controlled exclusively by the control unit, and furthermore, is penalised by the high cost of components (variable-displacement pump, inverter, etc.).

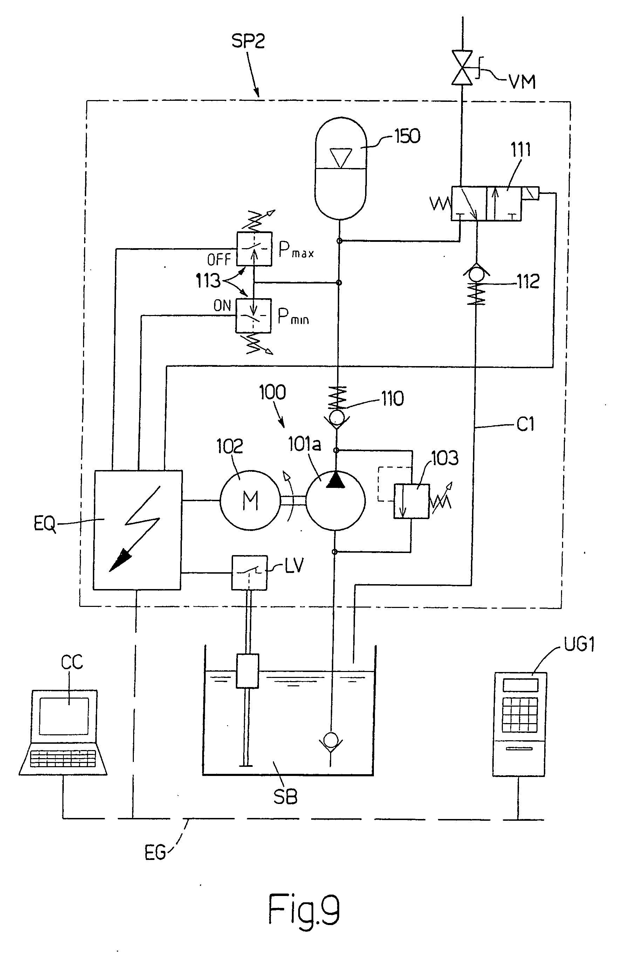

Figure 9 shows a second embodiment of a pumping system SP2 for distributing fluids in a plant object of the present invention.

In the embodiment shown in figure 9, a volumetric pump 101a, combined with a pneumatic accumulator 150 is used. As usual, volumetric pump 101a is operated by an electrical motor 102 and a maximum pressure valve 103 is also envisaged.

In this way, each excess of load of the positive-displacement pump 101a, instead of being relieved by valve 103 towards tank SB, is stored by pneumatic accumulator 150 to be used for subsequent deliverings, thus relieving the work load of pump 101a.

The system is completed by a one-way valve 110 which avoids the flow-back from accumulator 150 towards pump 101a, and a solenoid valve 111 (3-ways/2-positions) which in the event of an emergency, a blackout or simply when electrical panel EQ is switched off and the workshop is closed, secures hydraulic circuit C1 by isolating pumping assembly 100 and relieving hydraulic circuit C1 though a one-way valve 112.

Furthermore, electrical panel EQ controls solenoid valve 111 and manages electrical motor 102 through ON/OFF enabling generated by a pressure switch 113 with two intervention thresholds Pₘₐₓ-Pₘᵢₙ (or, alternatively, two pressure switches, one of which calibrated to Pₘₐₓ and the other to Pₘᵢₙ). In this way, pump 101a only starts up when the pressure in hydraulic circuit C1 drops under threshold Pₘᵢₙ and is switched off when Pₘₐₓ is reached.

Pₘᵢₙ will be equal to the pressure required by hydraulic circuit C1 to ensure good dispensing also in adverse operating conditions.

Pₘₐₓ is determined by the working pressure Pₑ of the weakest component, minus a safety margin (Pₘₐₓ=Pₑ-10bar).

Excess dispensed flow rates, due to high pressures, will be cancelled out by a flow rate regulating system SR1, SR2, SR3 seen in relation to figures 4, 5, 6.

Knowing the maximum working pressure of the plant Pₘₐₓ, another fundamental parameter i.e. the pre-load pressure P_{N} of pneumatic accumulator 150 is determined.

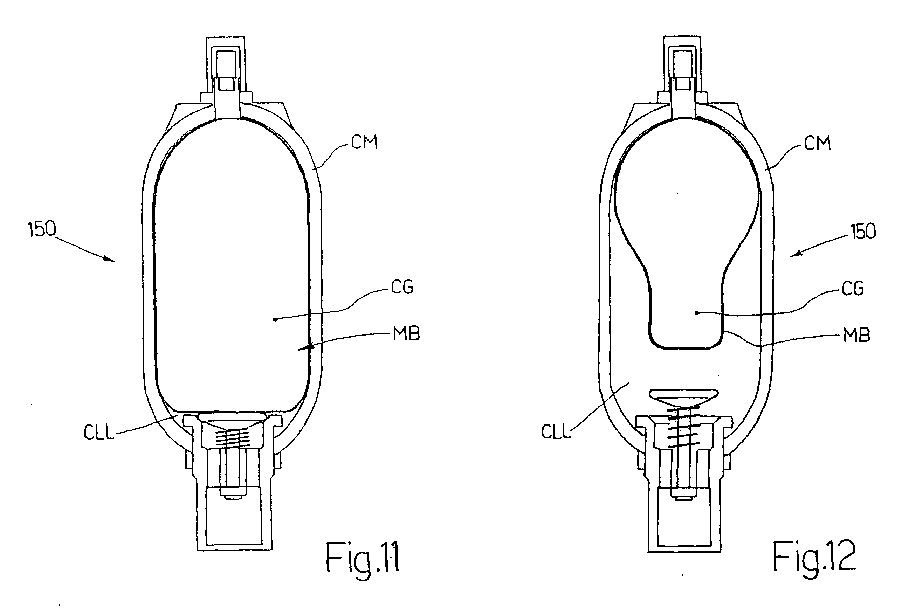

Pneumatic accumulator 150 (see figure 11, 12) chosen for the application comprises a metallic container CM, containing a closed bag (MB) or membrane.

Bag MB separate one chamber of the liquid CLL from the space occupied by the gas CG.

Initially, bag MB, filled with nitrogen at a pressure P_{N}, occupies the entire volume of metallic container CM. Therefore, by connecting pneumatic accumulator 150 to pressurised hydraulic circuit C1, if the pressure P of the fluid is P<P_{N} the fluid cannot enter into liquid chamber CLL.

When, instead, input pressure P of hydraulic circuit C1 exceeds the pre-load pressure P_{N} of pneumatic accumulator 150, fluid FL1 enters within liquid chamber CLL reducing the initial volume of bag MB, until a balance between P and P_{N} is generated. In this way, pressurised liquid is accumulated in fluid chamber CLL.

By increasing the pressure P of the fluid, bag MB is further compressed, determining a better capacity of pneumatic accumulator 150.

However, there is a maximum compression ratio n:1, recommended by the manufacturer, between P and P_{N}, to be respected to prevent damage to the membrane MB. In the present case, having to operate up to pressure Pₘₐₓ, pneumatic accumulator 150 will be pre-loaded at a pressure P_{N}=Pₘₐₓ:n, respecting the compression ratio n:1.

Given that pneumatic accumulator 150 represents a considerable reserve of pressurised fluid, it must be isolated by means of solenoid valve 111 in order to secure the plant.

When solenoid valve 111 is not powered, it is positioned so that the delivery of pumping unit 100 is closed and hydraulic circuit C1 is relieved.

One-way valve 112 on relief is calibrated to 0.5 bars to avoid the pipes from being entirely emptied and the formation of air bubbles. By running pumping assembly 100, solenoid valve 11 is powered and hydraulic circuit C1 is pressurised again.

The operation of the system envisages a first filling step of pneumatic accumulator 150, which is filled with fluid, compressing the nitrogen present in bag MB and making the pressure in the hydraulic circuit C1 rise.

Having reached pressure Pₘₐₓ, the pressure switch 113 switches and shuts down electrical motor (102). At this point, by opening any user U1', U1", U1"', fluid FL1 is provided by pneumatic accumulator 150 without requiring a new start-up of pump 101a. By proceeding to dispense, the pressure in hydraulic circuit C1 drops to Pₘᵢₙ causing a new intervention of pressure switch 113 and the start-up of electrical motor 102. Pump 101a will continue to run regardless of the active dispensing requests, until hydraulic accumulator 150 is fully recharged and the pressure has returned to Pₘₐₓ.

Considering that electrical motor 102 is switched on when pneumatic accumulator 150 is empty(Pₘᵢₙ) and stops only when it has recharged (Pₘₐₓ), it results that by increasing the capacity of accumulator 150, the start-ups of electrical motor 102 are decreased. Furthermore, regardless of the flow rate of pump 101a, the flow rate will be completely assimilated by pneumatic accumulator 150, solving the problem of relieving the flow rate in excess.

As mentioned said total efficiency of the system will tend towards values in the 80-90% range, until now inconceivable for traditional assemblies.

However, knowing the volume will not suffice to define the real capacity of accumulator 150.

Indeed, if pneumatic accumulator 150 has a maximum running pressure Pₘₐₓ and a pre-load P_{N}=Pₘₐₓ:n, the maximum accumulation capacity will be obtained exactly by operating between Pₘₐₓ and P_{N} (all the accumulated volume is rendered).

In the present case, pneumatic accumulator 150 works between Pₘₐₓ and Pₘᵢₙ, consequently, if Pₘᵢₙ is approximately equal to P_{N}, the final efficiency will be maximum; otherwise, a higher Pₘᵢₙ will correspond to a lower actually exploited accumulation capacity. Indeed, in this case, the accumulated fluid volume in the operating range between P_{N} and Pₘᵢₙ cannot be recovered.

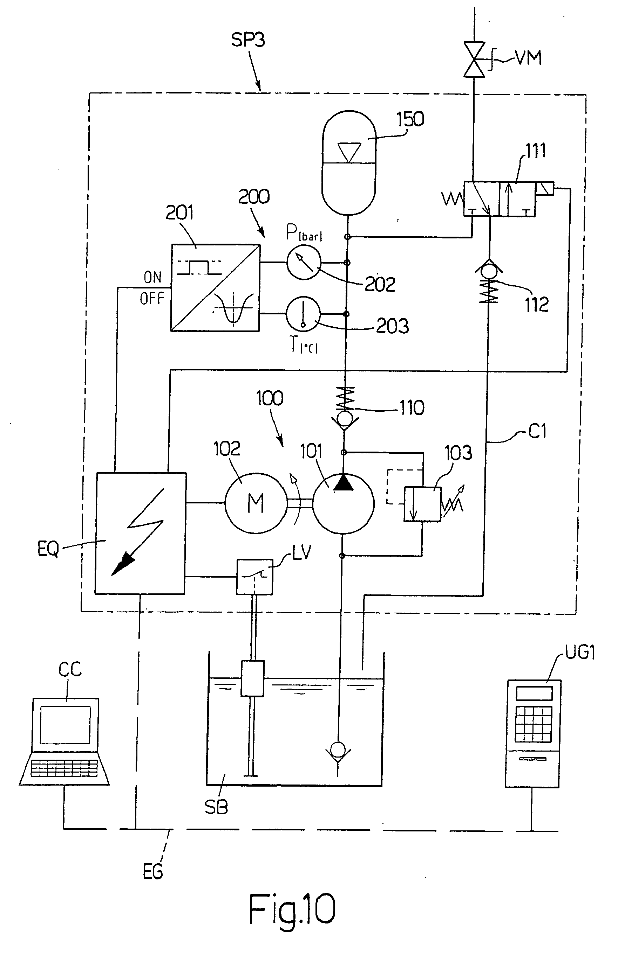

Figure 10 shows a third embodiment of a pumping system SP3 used in a distributing plant object of the present invention.

This third embodiment aims at increasing the efficiency of pumping system SP2 (described with reference to figure 9).

In pumping system SP3 shown in figure 10, the efficiency of pneumatic accumulator 150 is maximised so as to minimise the start-ups of electrical motor 102.

In order to obtain this result, instead of using a pressure switch with fixed calibration Pₘᵢₙ to control the start-up of electrical motor 102 (solution previously seen with reference to figure 9), an electronic board adapted to calculate the minimum operating pressure according to the temperature of fluid FL1 is used.

In this solution, variable flow rate pumping assembly 100 is similar to that described in the second embodiment (figure 9) with the sole exception of the part related to the presence of transducers 200, which define the operating parameters of the system.

In this version, pressure switch 113 with two intervention thresholds Pₘₐₓ-Pₘᵢₙ, seen in relation to figure 9, is replaced by an electronic board 201 (figure 10) which reads the pressure and temperature of the fluid in hydraulic circuit C1 and processes the run/stop enable for electrical panel EQ, which, as usual, controls electrical motor 102.

Furthermore, the fluid pressure is read by a pressure transducer 202, while the temperature is read by a temperature transducer 203.

Electronic board 201 is programmed to provide an OFF signal when the pressure of fluid FL1 in hydraulic circuit C1 reaches the maximum reference pressure Pₘₐₓ, defined according to the working pressure Pₑ of the weakest component, and to provide an ON signal when the pressure drops under threshold Pₘᵢₙ, calculated according to the temperature of fluid FL1.

In order to define Pₘᵢₙ, electronic board 201 must be set so as to define the type of fluid FL1 treated and with at least two significant value pairs (pressure, temperature) to define the features of pumping system SP3.

As in the case of pumping system SP2 in figure 9, the maximum working pressure of the plant Pₘₐₓ, is fixed according to the weakest component and consequently for electronic board 201 represents a constant.

The minimum pressure Pₘᵢₙ, is instead calculated on a case-by-case basis according to a characterised operating curve of the system.

Such curve is configured by means of the initial settings of electronic board 201 which relate to the type of fluid FL1 (according to the SAE classification of viscosity and temperature) and at least one reference point for pressure and temperature.

In practice, during the test procedure, the type of fluid LF1 is selected, electronic board 201 detects the temperature and the operator performs tests to define the minimum optimal pressure Pₘᵢₙ for plant operation.

Knowing the data related to temperature, pressure and fluid type, electronic board 201 is able to process a numeric model for redefining, as temperature varies, pressure Pₘᵢₙ adapted to ensure the required performance in terms of flow rate and number of ensured contemporary loads.

It is obvious that in any plant made according to the dictates of the present invention, the combinations of flow rate adjustment systems SR1, SR2, SR3 (figures 4, 5, 6) and pumping systems SP*, SP1, SP2, SP3 (figures 7, 8, 9, 10) may be of any type to satisfy the specific needs of customers.

Briefly, the advantages of the present invention are:
- the pressure in the plant is autonomously adapted to the temperature at which the fluid is working, without any human intervention; this allows the system to constantly work under the best conditions;
- possibility of fully exploiting the capacity of a pneumatic accumulator;
- energy consumption because the system guarantees not only that 100% of the fluid driven by the pump reaches the pneumatic accumulator, but also ensures a high number of start-ups and shut-downs.

## Claims

1. A distribution plant for at least one fluid (FL1) in a workshop; the plant comprising:
(a) storage means (SB) of the fluid (FL1);
(b) at least one pumping system (SP1; SP2; SP3) for pumping the fluid (FL1);
(c) at least one circuit (C1) for distributing the fluid (FL1);
(d) dispensing means (11, 12, 13, 14, 15, 16) of the fluid (FL1); said dispensing means (11, 12, 13, 14, 15, 16) being associated to each user (U1'); and
(e) electronic means (UG1, CC, EG) for remotely managing the plant itself;
the plant **characterised in that**
- said pumping system (Sp1; SP2; SP3) is adapted to ensure a variable flow rate of the fluid (FL1) according to the requests of each user (U1'); and **in that**
- the dispensing means (11, 12, 13, 14, 15, 16) comprise a regulation system (SR1; SR2; SR3) of the flow rate (FL1) in each user (U1').

2. A plant according to claim 1, wherein the pumping system (SP*) comprises a pumping assembly (100) which is managed by means of an electrical panel (EQ), which monitors the level of fluid (FL1) by means of a level switch (LV), and the main operating parameters of the system itself by means of a series of transducers (200).

3. A plant, as claimed in claim 1, wherein the pumping system (SP1) comprises a pumping assembly (100), which, in turn, comprises a variable-displacement pump (101) to which an electrical motor (102) and a maximum pressure valve (103) are coupled.

4. A plant, as claimed in claim 3, wherein there is an electrical panel (EQ) which controls an electrical motor (102) and operates the servo-mechanism in charge of varying the displacement of the pump (101).

5. A plant, as claimed in claim 4, wherein the electrical motor start-up enable (102) and the displacement increase/decrease commands are generated by an electronic board (104), which compares the dispensed flow rate (Qₜ) against the required flow rate (Qᵣ), and wherein the dispensed flow rate (Qₜ) is read by a volume counter (105) in series to delivery, while the required flow rate (Qᵣ) is given, in turn, by the sum of the loads set by the control unit (UG1).

6. A plant, as claimed in claim 3, wherein, alternatively to the variable-displacement pump (101), a fixed-displacement pump is used in which the number of revolutions are varied.

7. A plant, as claimed in claim 6, wherein the control of the electrical motor (102) is performed either by means of an inverter, or by operating the pump with a mechanical servo controlled variable speed motor.

8. A plant, as claimed in claim 1, wherein in the pumping system (SP2) a positive-displacement pump (101a) is used, combined with a pneumatic accumulator (150) where all the excess flow rate of the positive-displacement pump (101a) is stored for use in the later dispensing operations, thus relieving the work load of the positive-displacement pump (101a) itself.

9. A plant, as claimed in claim 8, wherein a one-way valve (110) is envisaged to avoid the flow-back from the pneumatic accumulator (150) towards the pump (101a), and a solenoid valve (111) (3-ways/2-positions) which in the event of an emergency, a blackout or simply when the system is switched off and the workshop is closed, secures the hydraulic circuit (C1) and pumping assembly (100), by relieving hydraulic circuit (C1) itself though a one-way valve (112).

10. A plant, as claimed in claim 9, wherein an electrical panel (EQ) controls the solenoid valve (111) and manages the electrical motor (102) through ON/OFF enabling generated by a two-level pressure switch (113) (Pₘₐₓ-Pₘᵢₙ), or, alternatively, two pressure switches one of which calibrated to (Pₘₐₓ) and the other to (Pₘᵢₙ), so that the pump (101a) is run only when the pressure in the hydraulic circuit (C1) drops underneath the threshold (Pₘᵢₙ) and is switched off when the value (Pₘₐₓ) is reached.

11. A plant, as claimed in claim 1, wherein in the pumping system (SP3) an electronic board (201) adapted to calculate the minimum operating temperature according to the temperature of the fluid (FL1), to maximise efficiency of pneumatic accumulator (150) in order to minimise electrical motor start-ups (102), is used.

12. A plant, as claimed in claim 11, wherein the electronic board (201) is programmed to provide a signal (OFF) when the pressure of the fluid (FL1) in the hydraulic circuit (C1) reaches the maximum reference pressure (Pₘₐₓ), defined according to the working pressure (Pₑ) of the weakest component, and to provide a signal (ON) when the pressure drops under the threshold (Pₘᵢₙ), calculated according to the temperature of the fluid (FL1).

13. A plant, as claimed in claim 12, wherein the electronic board (201), in order to define (Pₘᵢₙ), is set according to the type of distributed fluid (FL1), with at least one pair of significant values (pressure, temperature) for defining the features of the pumping system (SP3).

14. A plant, as claimed in claim 1, wherein the flow rate (FL1) regulating system (SR1) comprises a plurality of valves (VL1, VL2, EV1, EV2), arranged according to a hydraulic diagram, and wherein, if valve (13) is opened, controlled by the control unit (UG1), the flow of fluid (FL1) crosses the system (SR1).

15. A plant, as claimed in claim 1, wherein the flow rate (FL1) regulating system (SR1) comprises a plurality of valves (VL1, VL2, EV1, EV2), arranged according to a hydraulic diagram, and wherein, if the valve (EV1) is opened in series with (VL1), with (EV2) closed, there is a minimum fluid flow rate (FL1) in the system.

16. A plant, as claimed in claim 1, wherein the flow rate (FL1) regulating system (SR1) comprises a plurality of valves (VL1, VL2, EV1, EV2), arranged according to a hydraulic diagram, and wherein, if valve (EV1) is closed and valve (EV2) is opened in series with (VL2), there is a medium fluid flow rate (FL1) in the system.

17. A plant, as claimed in claim 1, wherein the flow rate (FL1) regulating system (SR1) comprises a plurality of valves (VL1, VL2, EV1, EV2), arranged according to a hydraulic diagram, and wherein, if both valves (EV1, EV2) are opened, there is a maximum fluid flow rate (FL1) in the system.

18. A plant, as claimed in claim 1, wherein in the system (SR1) a volume counter (12) forming the system (SR2) is integrated, where solenoid valves (EV1, EV2) are directly controlled by the control unit (UG1).

19. A plant, as claimed in claim 1, wherein the system (SR3) is installed directly within a dispensing gun (16).

20. A plant, as claimed in claim 19, wherein the system (SR3) comprises two valves (VLmax, VLmin) between which is arranged a manually activatable distributor (DB) (of the 3/3 type).
